# EUROPEAN PATENT APPLICATION

(11) **EP 3 730 356 A1**
(43) Date of publication of application: **28.10.2020**
(21) Application number: 19213945.9
(22) Date of filing: 05.12.2019
(51) Int. Cl.: B60S 1/42, B60S 1/38

(54) **CHATTER-FREE WINDSHIELD WIPER**

(30) Priority: 26.04.2019 ZA 201902636
(71) Applicant: De Villiers, John Laddier, 4001 Durban (ZA)
(72) Inventor: De Villiers, John Laddier, 4001 Durban (ZA)
(74) Representative: Dummett Copp LLP

(57) **Abstract**

A wiper blade mounting assembly for mounting a wiper blade on a wiper blade mounting arm that, in operation, sweeps across a wiped surface reciprocally. The wiper blade mounting assembly comprises:
an arm sub-assembly configured for attachment to the wiper blade mounting arm; and
a wiper blade sub-assembly configured for attachment to a wiper blade;
the arm and wiper blade sub-assemblies being coupled across a swivel coupling configured to permit a predetermined degree of swivelling of the wiper blade sub-assembly relative to the arm sub-assembly.

## Description

### Field of the invention

This invention relates to windscreen or windshield wipers for vehicles.

### Background to the invention

A windscreen or windshield (American English) wiper is a device used to remove rain, snow, ice and debris from a window, typically a vehicle window. Almost all motor vehicles, including cars, trucks, buses, train locomotives, and watercraft with a cabin are equipped with one or more such wipers, which are usually a legal requirement.

A wiper generally consists of a metal arm, one end of which is mounted on a driven pivot mounting while the other end has a long rubber blade attached to it. The pivot mounting is driven by a motor, typically an electric motor, that pivots the arm reciprocally so that the wiper blade mounted on the arm is swept reciprocally (back and forth) over a swept surface, normally the glass of the windscreen. In operation, the reciprocating blade sweeps water, other precipitation or any other impediments to visibility, from the swept surface.

Wiper blades are typically made from rubber compounds or similarly elastically deformable (flexible) materials and in a correctly operating wiper blade, with the correct degree of flexibility, the contact edge of the wiper blade bends automatically to incline the wiper blade contact edge away from the direction of movement of the wiper blade across the swept surface. As a result, the contact edge, in effect, trails the wiper blade across the swept surface. On the return stroke, when the wiper motor reciprocates the wiper in the opposite direction, the flexibility of the wiper blade must be sufficient to permit the wiper blade contact edge to switch its angle of incline from one side to the other, to once again trail the wiper blade across the swept surface as the wiper blade is driven in the opposite direction.

A problem often experienced with windscreen wipers is wiper blade judder or chatter, caused by the wiper blade skipping across the swept glass surface instead of sweeping smoothly across it. The failure could arise from problems with the wiper blade itself, such as brittleness arising out of age or it could arise from problems with the swept surface, such as dirt or ice on the windscreen.

As indicated, the causes of wiper blade chatter are numerous, but in almost all cases the root cause is a failure of the normally recumbent contact edge of the wiper blade automatically to adjust its angle of incline from one side to the other as the wiper blade reciprocates across the swept surface. The wiper blade is correctly inclined for sweeping in one direction of reciprocation, without any chatter. However, in the return reciprocation direction, the wiper blade fails to adjust its angle of incline and, instead of the wiper blade contact edge trailing the wiper blade across the swept surface, the contact edge leads across the swept surface, which causes wiper blade skipping and chatter. The problem with wiper blade skipping and chattering is that it limits the wiper blade's effectiveness in removing fluid from the surface of the windscreen, thus reducing the vehicle operator's visibility whilst simultaneously producing an undesirable noise.

It is an object of this invention to obviate this problem.

### Summary of the invention

This invention provides a wiper blade mounting assembly for mounting a wiper blade on a wiper blade mounting arm that, in operation, sweeps across a wiped surface reciprocally, the wiper blade mounting assembly comprising an arm sub-assembly configured for attachment to the wiper blade mounting arm and a wiper blade sub-assembly configured for attachment to a wiper blade, the arm and wiper blade sub-assemblies being coupled across a swivel coupling configured to permit a predetermined degree of swivelling of the wiper blade sub-assembly relative to the arm sub-assembly.

In one embodiment of the invention, the arm sub-assembly is integral with the wiper blade mounting arm and the wiper blade sub-assembly is integral with the wiper blade.

This embodiment of the invention is essentially an original equipment manufacture (OEM) version of the invention, since it requires the arm and wiper blade sub-assemblies being original parts manufactured to integrate the invention into the windscreen wiper assembly.

In a second embodiment of the invention, the arm sub-assembly and wiper blade sub-assembly are constituted by discrete parts that are separate from the wiper blade mounting arm and the wiper blade respectively and configured for attachment of the arm sub-assembly to the wiper blade mounting arm and of the wiper blade sub-assembly to the wiper blade.

This embodiment of the invention is essentially an aftermarket version of the invention that can be mounted to a windscreen wiper assembly already installed on a vehicle.

In both embodiments of the invention, the wiper blade sub-assembly may conveniently be configured for indirect attachment to the wiper blade, the wiper blade sub-assembly being configured for attachment to a section of the wiper blade mounting arm that is configured for attachment to the wiper blade.

The invention includes a method of mounting a wiper blade on a wiper blade mounting arm that, in operation, sweeps across a wiped surface reciprocally, the method comprising the steps of:
attaching an arm sub-assembly configured for attachment to the wiper blade mounting arm, to the wiper blade mounting arm;
attaching a wiper blade sub-assembly, configured for attachment to a wiper blade, to the wiper blade; and
coupling the arm and wiper blade sub-assemblies across a swivel coupling configured to permit a predetermined degree of swivelling of the wiper blade sub-assembly relative to the arm sub-assembly.

### Brief Description of the drawings

The invention will be further described with reference to the accompanying exemplary drawings in which:
Figure 1 is a diagrammatic side elevation, partly in section, of a wiper blade mounting assembly according to the invention mounted to a wiper blade and wiper blade mounting arm;
Figure 2 is a sectional side elevation of the wiper blade mounting assembly of Figure 1; and
Figure 3 includes diagrammatic front elevations of the wiper blade mounting assembly, wiper blade and wiper blade mounting arm illustrating the pivoting action of the wiper blade mounting assembly.

### Description of embodiments of the invention

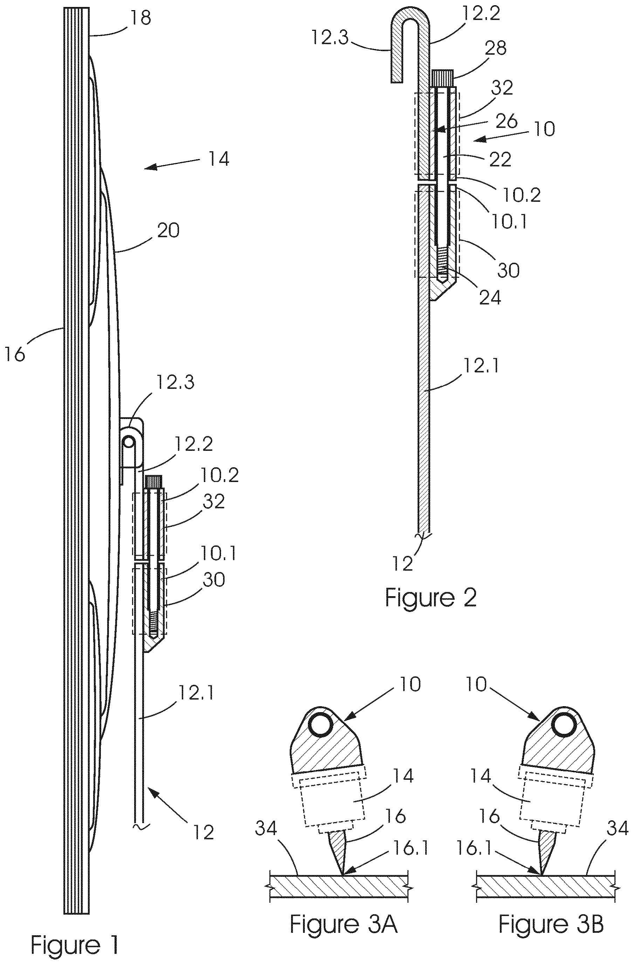

Figure 1 illustrates an example of a wiper blade mounting assembly 10 according to the invention mounted on a wiper blade mounting arm 12.

The wiper blade mounting arm 12 forms part of a motor vehicle wiper assembly consisting of the wiper blade arm 12 to one end of which a wiper blade assembly 14 is mounted. The wiper blade assembly 14 is an assembly of parts, including an elastically deformable wiper blade 16 mounted in a blade holder 18 to which a so-called whippletree linkage 20 is connected. The whippletree linkage 20 connects the wiper blade assembly 14 to the arm 12 and distributes the downforce of the arm 12 evenly across the length of the blade holder 18 and blade 16.

The other end of the arm 12 (not shown) is mounted on a pivot mounting that is driven by a motor, typically an electric motor, that pivots the arm reciprocally so that the wiper blade 16, together with the wiper blade assembly 14 mounted on the arm 12, is swept reciprocally (back and forth) over the surface to be swept by the wiper blade 16 which, in this example, is the glass surface of a motor vehicle windscreen (34, in Figure 3).

The wiper blade mounting assembly 10 comprises an arm sub-assembly 10.1 configured for attachment to the wiper blade mounting arm 12 and a wiper blade sub-assembly 10.2 configured for attachment to the wiper blade assembly 14.

The arm (10.1) and wiper blade (10.2) sub-assemblies are separate parts that are coupled to one another across a swivel coupling.

Any type of swivel coupling may be used, but the coupling preferred, being the one illustrated, is constituted by a pivot pin 22 that is secured to the arm subassembly 10.1, the pivot pin 22 being screwed into a complementally screw-threaded blind socket 24 formed in the arm subassembly 10.1. The wiper blade subassembly 10.2 is formed with an open-ended barrel 26. The pivot pin 22 extends through the barrel 26 to secure the wiper blade subassembly 10.2 to the arm subassembly 10.1, the pin 22 including an enlarged head 28 that retains the wiper blade subassembly 10.2. The pivot pin 22 is a loose fit within the barrel 26, which permits the wiper blade subassembly 10.2 to pivot relatively to the arm subassembly 10.1.

Stop formations (not shown) are used to limit the degree of swivelling between the arm (10.1) and the wiper blade (10.2) subassemblies.

The embodiment of the invention illustrated in the drawings is an aftermarket version of the invention that is intended for mounting to a pre-existing windscreen wiper assembly 14 already installed on a vehicle.

This being so, the arm sub-assembly 10.1 and the wiper blade sub-assembly 10.2 are constituted by discrete parts that are separate from the wiper blade mounting arm 12 and the wiper blade assembly 14.

In this construction, the wiper blade sub-assembly 10.2 is indirectly attached to the wiper blade assembly 14 in that the wiper blade sub-assembly 10.2 is attached to a section (12.2) of the wiper blade mounting arm 12 that is configured for attachment to the wiper blade assembly 14, in this case by means of a hook formation 12.3.

The wiper blade mounting arm 12 is severed into two parts, a pivot part 12.1 and a wiper blade part 12.2. The severed parts 12.1, 12.2 are re-connected by means of the wiper blade mounting assembly 10, which is made up of arm (10.1) and wiper blade (10.2) sub-assemblies that are initially separate and that are coupled to one another across a swivel coupling.

In practice, the wiper blade mounting assembly 10 is mounted to the wiper blade mounting arm 12 in a number of simple steps.

The mounting arm 12 is first cut to separate the mounting arm 12 into pivot and wiper blade parts 12.1, 12.2.

The arm sub-assembly 10.1 is then secured to the pivot part 12.1 of the arm 12 and the wiper blade sub-assembly 10.2 is secured to the wiper blade part 12.2 of the arm 12.

Any number of securement means are available and, in the example illustrated in the drawings, the wiper blade assembly 10 is secured to the arm 12 by means of sleeves 30, 32.

A sleeve 30 secures the arm sub-assembly 10.1 to the pivot part 12.1 of the arm 12 and a sleeve 32 secures the wiper blade sub-assembly 10.2 to the wiper blade part 12.2 of the arm 12.

The wiper blade sub-assembly 10.2 is then secured to the arm sub-assembly 10.1 by means of the pivot pin 22.

The windscreen wiper is now ready for use.

Referring to Figure 3, when the arm 12 is reciprocated in one direction, for instance from right to left as illustrated in Figure 3A, the limited swivel permitted by the pivot pin 22 and stop formations allows the wiper blade assembly 14 to swivel to an inclined position that inclines the wiper blade 16 away from the direction of movement of the wiper blade across the swept surface 34. As a result, the contact edge 16.1 of the wiper blade 16, trails the wiper blade across the swept surface 34.

On the return stroke, when the wiper motor reciprocates the wiper arm 12 in the opposite direction (that is from left to right as illustrated in Figure 3B), the pivot pin 22 and stop formations allow the wiper blade assembly 14 to swivel away from the Figure 3A position to an opposite inclined position that, once again, inclines the wiper blade 16 away from the (opposite, reciprocated) direction of movement of the wiper blade across the swept surface 34. As a result, the contact edge 16.1 of the wiper blade 16, trails the wiper blade across the swept surface 34.

In this way, chattering or juddering of the windscreen wiper is avoided.

## Claims

1. A wiper blade mounting assembly for mounting a wiper blade on a wiper blade mounting arm that, in operation, sweeps across a wiped surface reciprocally, the wiper blade mounting assembly comprising:
an arm sub-assembly configured for attachment to the wiper blade mounting arm; and
a wiper blade sub-assembly configured for attachment to a wiper blade;
the arm and wiper blade sub-assemblies being coupled across a swivel coupling configured to permit a predetermined degree of swivelling of the wiper blade sub-assembly relative to the arm sub-assembly.

2. The wiper blade mounting assembly of claim 1 in which the arm sub-assembly is integral with the wiper blade mounting arm and the wiper blade sub-assembly is integral with the wiper blade.

3. The wiper blade mounting assembly of claim 1 in which the arm sub-assembly and wiper blade sub-assembly are constituted by discrete parts that are initially separate from the wiper blade mounting arm and the wiper blade respectively:
the arm sub-assembly being configured for attachment to the wiper blade mounting arm; and
the wiper blade sub-assembly being configured for attachment to the wiper blade.

4. The wiper blade mounting assembly of any one of the preceding claims in which the wiper blade sub-assembly is configured for indirect attachment to the wiper blade, the wiper blade sub-assembly being configured for attachment to a section of the wiper blade mounting arm that is configured for attachment to the wiper blade.

5. A method of mounting a wiper blade on a wiper blade mounting arm that, in operation, sweeps across a wiped surface reciprocally, the method comprising the steps of:
attaching an arm sub-assembly configured for attachment to the wiper blade mounting arm, to the wiper blade mounting arm;
attaching a wiper blade sub-assembly, configured for attachment to a wiper blade, to the wiper blade; and
coupling the arm and wiper blade sub-assemblies across a swivel coupling configured to permit a predetermined degree of swivelling of the wiper blade sub-assembly relative to the arm sub-assembly.
